# EUROPEAN PATENT APPLICATION

(11) **EP 4 717 885 A1**
(43) Date of publication of application: **01.04.2026**
(21) Application number: 23218754.2
(22) Date of filing: 20.12.2023
(51) Int. Cl.: F01D 21/04, F02C 7/04, B64C 11/00, B64C 11/46, B64D 33/02, B64D 27/31, B64D 27/34, B64D 27/40

(54) **AIRCRAFT PROPULSION UNIT CONTAINMENT RINGS**

(71) Applicant: Lilium GmbH, 82234 Wessling (DE)
(72) Inventor: Vermeiren, Sebastien, 82234 Wessling (DE)
(74) Representative: Ter Meer Steinmeister & Partner

(57) **Abstract**

The present invention relates to a propulsion unit (10) for an aircraft, the propulsion unit comprising: a pair of engines (100a, 100b), each engine having a bladed disk driven by a motor; and a containment ring (20) located downstream of an air intake of the engines, wherein the containment ring (20) comprises a main body having at least two openings (203a, 203b) to provide air flow paths to the pair of engines, and wherein the main body comprises an outer part (200) circumferential to the at least two openings to protect components adjacent to the propulsion unit against damage in a case of blade failure, the main body further comprising a separating part (202) with a reduced mechanical stability compared to the outer part to separate the openings from each other. The present invention also relates to an aircraft, preferably a vertical take-off and landing aircraft, comprising the propulsion unit (10).

## Description

### Field of Invention

This invention relates to containment rings for propulsion units of aircraft, preferably vertical take-off and landing aircraft.

### Background

Propulsion engines for aircrafts, such as turbine engines, have high-speed rotating components, such as bladed disks. These components can fail under the high stresses induced by a combination of loads (such as pressure, inertial forces due to rotation, and impact) and mechanical weak points (such as cracks, material defects, dents, and geometrical features inducing a stress concentration). These components can release a very high energy when they fail which can cause damage or injury to the surrounding systems or people. In the case of an aircraft propulsion unit, failure of these components may cause catastrophic damage to the surrounding components of the aircraft.

Typically, it is considered that the worst-case scenario is a disk burst event where a third of the bladed disk breaks off (i.e., an angular sector of 120°) and is released from the disk. Such a scenario is consistent with the way that cracks typically propagate through a bladed disk. Another example of failure of these components is a so-called 'blade-off' event, where a blade of the bladed disk breaks off from the hub, releasing the blade radially outward at high speed.

Existing solutions for protecting against disk burst or blade-off events include: (1) identifying the likely path of debris and designing the aircraft without any critical system in this path (2) increasing the manufacturing and lifetime controls on the rotating components, including: careful material selection, non-destructive testing in service, and removal after a fixed in-service hours/cycles and (3) surrounding each individual engine with a casing, such as a containment ring, strong enough to contain any debris from that engine thereby preventing debris from escaping radially and causing damage.

However, these existing solutions lead to a number of disadvantages. In particular, solution (1) leads to increased design complexity, solution (2) leads to more costly manufacturing and operating costs, and onerous maintenance requirements, and solution (3) leads to increased mass due to each engine requiring an individual containment ring, which in turn reduces the possible payload to be carried by the aircraft.

The present invention seeks to at least partly ameliorate these disadvantages.

### Summary of the Invention

Aspects and embodiments of the present invention are set out in the appended claims. These and other aspects and embodiments of the invention are also described herein.

According to at least one aspect described herein, there is provided a propulsion unit for an aircraft, the propulsion unit comprising: a pair of engines, each engine having a bladed disk driven by a motor; and a containment ring located downstream of an air intake of the engines, wherein the containment ring comprises a main body having at least two openings to provide air flow paths to the pair of engines, and wherein the main body comprises an outer part circumferential to the at least two openings to protect components adjacent to the propulsion unit against damage in a case of blade failure, the main body further comprising a separating part to separate the openings from each other.

Therefore, a single unitary containment ring is provided for a pair of engines. Advantageously, this unitary containment ring can save weight as compared to separate individual containment rings because it reduces the amount of material required between the engines by providing a separating part of the main body between the engines rather than provide two walls between the engine as are formed when each engine has its own independent containment ring. The unitary containment ring may also provide improve structural integrity to the propulsion unit as compared to individual independent containment rings that are not joined together.

Preferably, the separating part has a reduced mechanical stability compared to the outer part. For example, the separating part of the main body may be a reduced thickness as compared to the outer part of the main body. Advantageously, this allows the weight of the containment ring to be further reduced by reducing the amount of material between the engines of the propulsion unit.

Preferably, the outer part surrounds both of the engines. The outer part therefore forms a casing to protect system or people outside the propulsion unit from debris in the event of a failure of the bladed disk of one of the engines, such as a disk burst or blade-off event. Advantageously, this maintains protection for systems and people outside the containment ring while still reducing the overall weight of the containment ring.

Preferably, the separating part is formed as a shared wall between the engines. Advantageously, this reduces the amount of material between the engines of the containment unit which in turn reduces the weight of the containment ring and therefore the propulsion unit. This weight reduction is achieved by reducing the material between the engines, without comprising the mechanical stability of the outer part of the main body, meaning that systems and people outside the containment ring are still properly protected against debris released from the engines.

Preferably, the thickness of the shared wall is the same as, or less than, the thickness of the outer part of the main body. For example, the thickness of the shared wall may be less than 75% of the thickness of the outer part of the main body, or less than 50% of the thickness of the outer part of the main body. The thickness of the separating part may be selected based on a compromise between the required mechanical stability of the separating part and the desired weight reduction. For example, if the priority is to protect one engine against the other, the separating part may be chosen to be thick enough to prevent debris released from one engine damaging the other engine. In another example, if the priority is weight reduction, the separating part my be chosen to be relatively thin to maximise weight reduction but accepting that if the bladed disk of one engine fails the other engine may also be damaged.

Preferably, the separating part comprises at least one partial air duct. For example, the separating part may comprise a half-cylinder air duct. In this way, the separating part provides aerodynamic ducting for the engine while maximising the reduction in weight by providing the minimal amount of material between the engines.

Preferably, the openings are located between the at least one partial air duct and the outer part of the main body. For example, the separating part may comprise a first partial air duct and a second partial air duct, and the at least two openings may comprise a first opening located between the first partial air duct and the outer part of the main body and a second opening located between the second partial air duct and the outer part of the main body. Advantageously, this maintains protection for systems and people outside the containment ring while still reducing the overall weight of the containment ring, because the outer part of the main body prevent debris from escaping the containment ring.

Preferably, the separating part comprises a shared portion of the first partial air duct and the second partial air duct. Advantageously, this reduces the amount of material required to form the ducts, which in turn reduces the weight of the separating part and therefore the overall containment ring and propulsion unit. This weight reduction is achieved by reducing the material between the engines, without comprising the mechanical stability of the outer part of the main body, meaning that systems and people outside the containment ring are still properly protected against debris released from the engines.

Preferably, the thickness of the shared portion of the first and second partial air ducts is the same as, or less than, the thickness of the other portions of the first and second partial air ducts. When the thickness is the same, the air ducts will absorb the same amount of energy from debris regardless of where the debris impacts the ducts. When the thickness is reduced at the shared part, the overall weight of the separating part is reduced.

Preferably, the thickness of the at least one partial air duct is less than the thickness of the outer part of the main body. For example, the thickness of the at least one partial air duct may be less than 50% of the thickness of the outer part of the main body, preferably less than 40% of the thickness of the outer part of the main body, or more preferably less than 30% of the thickness of the outer part of the main body. Advantageously, The reduced thickness of the separating part of the main body as compared to the outer part of the main body reduces the weight of the containment ring while maintaining protection for systems and people from debris being released outside of the containment ring.

Preferably, the thickness of the outer part of the main body may be reduced (compared to the other sections of the outer part of the main body) for the sections of the outer part where a straight line from that section of the outer part towards one of the openings would intercept the separating part. This is because if debris released from the bladed disk would first hit the separating part before hitting the outer part, some of its energy would be absorbed by the separating part, meaning that the outer part need not be so thick, allowing a further reduction in weight.

Preferably, the propulsion unit comprises a leading edge flange arranged around the leading edge of the outer part of the main body and/or a trailing edge flange arranged around the trailing edge of the outer part of the main body. The flanges may be used to secure the containment ring within the propulsion unit.

According to another aspect described herein, there is provided an aircraft, preferably a vertical take-off and landing aircraft, comprising the propulsion unit as aforementioned. With the reduced weight of the containment ring of the propulsion unit, the weight of the aircraft is reduced with allows the aircraft to carry an increase payload.

Any apparatus feature as described herein may also be provided as a method feature, and vice versa. As used herein, means plus function features may be expressed alternatively in terms of their corresponding structure.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

Any feature in one aspect of the invention may be applied to other aspects of the invention, in any appropriate combination. In particular, method aspects may be applied to apparatus aspects, and vice versa. As used herein, means plus function features may be expressed alternatively in terms of their corresponding structure, such as a suitably programmed processor and associated memory. Furthermore, features implemented in hardware may generally be implemented in software, and vice versa. Any reference to software and hardware features herein should be construed accordingly.

The invention extends to methods, system and apparatus substantially as herein described and/or as illustrated with reference to the accompanying figures.

One or more aspects will now be described, by way of example only and with reference to the accompanying drawings having like-reference numerals, in which:
Figure 1 is a perspective view of an exemplary propulsion unit for an aircraft to indicate the problem solved by the present invention;
Figures 2a and 2b are a cross sectional view and a perspective view, respectively, of a containment ring for a propulsion unit according to a first embodiment of the present invention;
Figures 3a and 3b are a cross sectional view and a perspective view, respectively, of a containment ring for a propulsion unit according to a second embodiment of the present invention; and
Figures 4a and 4b are a cross sectional view and a perspective view, respectively, of a containment ring for a propulsion unit according to a third embodiment of the present invention.

### Detailed description

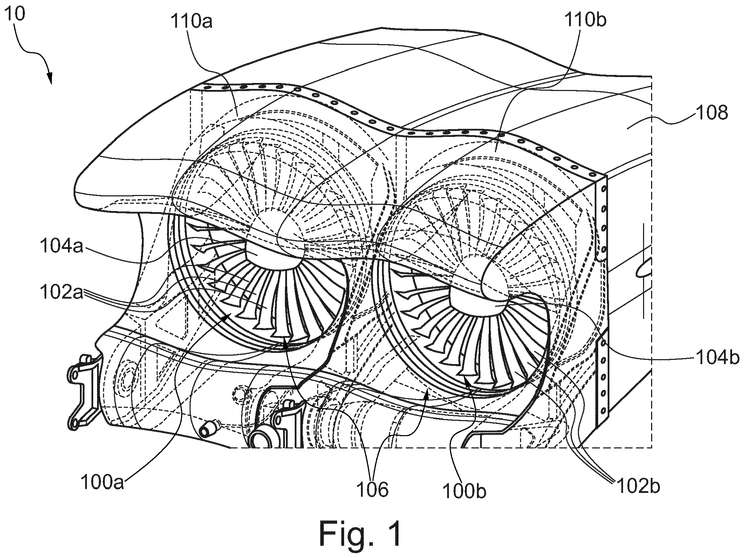

Figure 1 is a perspective view of an exemplary propulsion unit 10 for an aircraft to indicate the problem solved by the present invention.

The propulsion unit 10 comprises a first engine 100a and a second engine 100b. The first and second engine form a pair of engines. In this example, the engines are arranged in a twin configuration. Each of the first and second engines comprises a rotating component driven by a motor (not shown) and in this example the rotating component is a bladed disk. The first engine comprises a first bladed disk having a plurality of blades 102a attached to, and extending radially from, a first hub 104a. The second engine comprises a second bladed disk also having a plurality of blades 102b attached to, and extending radially from, a second hub 104b. The propulsion unit has an air intake 106 for the intake of air into the engine. The air intake may be a joint intake for the first and second engines or it may comprise separate intakes for each of the engines. In this example the air intake comprises separate intakes divided by an aerodynamic barrier.

The propulsion unit 10 in this example is mounted within an adjustable flap 108 of an aircraft, such as a vertical take-off and landing aircraft. The adjustable flap may be part of a wing or canard of the aircraft and may be adjustable between a first position where the propulsion unit is in a horizontal position to provide forward thrust and a second position where the propulsion unit is in a vertical position to provide upward thrust (or any intermediate position between the first and second positions).

Figure 1 shows one existing solution for mitigating the effects of a failure of the rotating components in an aircraft propulsion unit, corresponding to solution (3) discussed above. In this solution, each of the first and second engines 100a, 100b has its own individual and independent containment ring. The first engine 100a has a first containment ring 110a, and the second engine 100b has a separate second containment ring 110b. The containment rings are independent from one another, in that they are manufactured as separate components and do not share any part. The first and second containment rings are each located downstream of the air intake 108 of the propulsion unit, in that they are located further downstream than the air intake along the flow path of air passing into, through, and out of the engines of the propulsion unit. The first and second containment rings surround the first and second bladed disks respectively, and protect surrounding systems and people from debris that might be released from those disks in the event of a failure of the disk, such as a disk burst or blade-off event. The containment rings 110a, 100b are made sufficiently thick to mitigate the effect of a failure of the bladed disk. A problem with this solution is that the requirement for each engine to have its own individual containment ring leads to increased mass, which in turn reduces the possible payload to be carried by the aircraft.

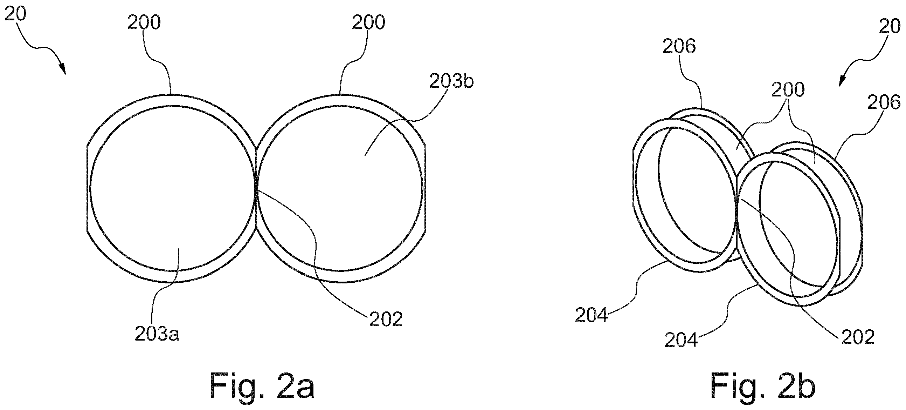

Figures 2a and 2b are a cross sectional view and a perspective view, respectively, of a containment ring 20 for a propulsion unit according to a first embodiment of the present invention. The remaining parts of the propulsion unit are not shown, but the containment ring shown in Figures 2a and 2b is intended for use as part of the propulsion unit 10 shown in Figure 1 in place of the two individual containments rings 110a, 110b shown in Figure 1 (that is, the containment ring 20 is for use with an aircraft propulsion unit comprising a pair of engines, each engine having a bladed disk driven by a motor, where the containment ring 20 is located downstream of an air intake of the engines).

In Figure 2, the containment ring 20 comprises a main body having at least two openings to provide air flow paths to the pair of engines. In this example, the main body has a first opening 203a and a second opening 203b. The first opening 203a provides an opening for an air flow path to the first engine 100a of the propulsion unit, and the second opening 203b provides an opening for an air flow path to the second engine 100b of the propulsion unit.

The main body comprises an outer part 200 that is arranged circumferential to the two openings. In other words, the outer part 200 of the main body forms a continuous ring surrounding the first and second openings. In this example, the outer part 200 of the main body follows the circumference of the bladed disk of the engines. The outer part 200 of the main body provides a casing to contain any debris that might be released in the event of a failure of the bladed disk of either the first engine or the second engine. The outer part 200 of the main body in this example also comprises two flanges: a leading edge flange 204 located around the outer part of the main body along the leading edge of the main body (i.e., the edge towards the front of the aircraft in use); and a trailing edge flange 206 located around the outer part of the main body along the trailing edge of the main body (i.e., the edge towards the aft of the aircraft in use). These flanges may be used, for example, to attach the containment ring 20 within the propulsion unit.

The main body also comprises a separating part 202 which separates the openings from one another. In this example, the separating part 202 forms a shared wall between the first engine and the second engine of the propulsion unit. The outer part 200 and the separating part 202 of the main body may be formed a single piece together.

Therefore, in this first embodiment, the containment rings of the first and second engines are merged together to provide a single unitary containment ring 20 surrounding both of the first and second engines. Advantageously, this merged containment ring 20 of Figure 2 can save weight as compared to the separate individual containment rings 110a, 110b described with reference Figure 1, because in Figure 2 there is a portion of the containment ring 20 that is shared which reduces the amount of material required to form a sufficient casing around both of the engines.

The thickness of the shared part of the containment ring (that is, the separating part 202 of the containment ring 20) may be the same as the thickness of the outer part of the main body. In this way, the containment ring provides the same level of protection against a disk failure to system or people outside of the containment ring 20 as it does to the components of the first engine against the second engine or vice versa.

In one example, the containment ring 20 may be sized to mitigate against the effects of a disk burst event. In this case, the outer part 200 of the main body may have a thickness of 5 mm, which is a typical thickness required to prevent escape of a disk segment outside of the propulsion unit in the event of a disk burst. To protect the other engine, the separating part in this case would also have a thickness of 5 mm to prevent escape of a disk segment from one engine to the other. Thus, in this example, the outer part 200 and the separating part 202 of the containment ring 20 have the same thickness and accordingly provide the same level of protection against escape of a disk segment.

In another example, the containment ring 20 may be sized to mitigate against the effects of a blade-off event only. In this case, the outer part 200 of the main body may have a thickness of 2 mm, which is a typical thickness required to prevent escape of a disk blade outside of the propulsion unit in the event of a blade-off event. To protect the other engine, the separating part in this case would also have a thickness of 2 mm to prevent escape of a disk blade from one engine to the other. Thus, in this example, the outer part 200 and the separating part 202 of the containment ring 20 again have the same thickness and accordingly provide the same level of protection against escape of a disk blade.

This merged containment ring of this first embodiment represents an improvement over the separate and independent containment rings shown in Figure 1 because it saves weight. Following the examples in the preceding paragraphs, in the arrangement of Figure 1 each of the individual containment rings 110a, 110bwould need to have a thickness of 5 mm all around to mitigate against a disk burst event, or 2 mm all around to mitigate against a blade-off event. Thus, between the two the engines, the two containment rings would together provide 10 mm of material (in the former case) or 4 mm of material (in the latter case) which is an unnecessarily large amount of material to protect one engine from the other. In the merged containment ring 20 of Figure 2, however, the thickness of the separating part 202 of main body of the containment ring 20 is the same as the thickness of the outer part 200 of the main body of the containment ring, which avoids unnecessary additional material, and thus additional weight, between the engines.

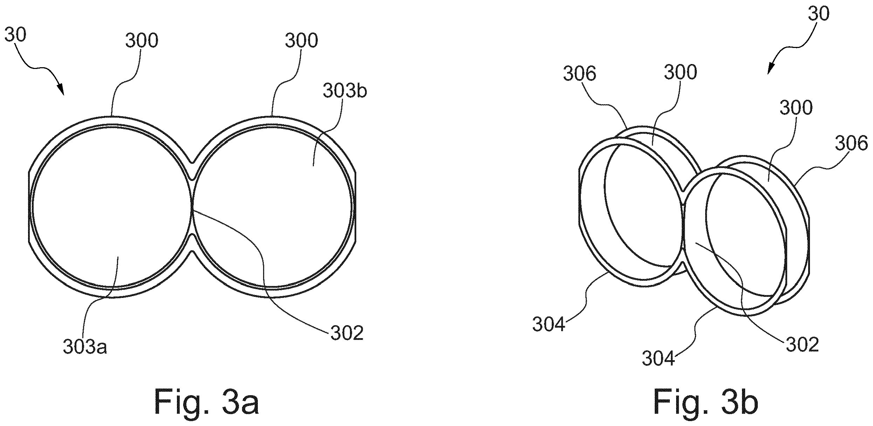

Figures 3a and 3b are a cross sectional view and a perspective view, respectively, of a containment ring 30 for a propulsion unit according to a second embodiment of the present invention. Again, the remaining parts of the propulsion unit are not shown, but the containment ring 30 shown in Figures 3a and 3b is intended for use as part of the propulsion unit 10 shown in Figure 1 in place of the two individual containments rings 110a, 110b shown in Figure 1 in the same way as the first embodiment described above.

The containment ring 30 of this second embodiment has a similar structure to the containment ring 20 of the first embodiment. In particular, the containment ring 30 of the second embodiment comprises a main body having at least two openings to provide air flow paths to the pair of engines. In this example, the main body has a first opening 303a and a second opening 303b providing air flow paths to the first and second engines 100a, 100b of the propulsion unit.

The main body again comprises an outer part 300 arranged circumferential to the two openings which provides a casing to contain any debris that might be released in the event of a failure of the bladed disk of either the first engine or the second engine. In this example, the outer part 300 of the main body again follows the circumference of the bladed disk of the engines. The outer part 300 of the main body again comprises a leading edge flange 304 around the leading edge of the outer part of the main body and a trailing edge flange 306 located around the trailing edge of the outer part of the main body. The main body also comprises a separating part 302 which has a reduced mechanical stability compared to the outer part 300. The separating part 302 separates the openings 303a, 303b from one another. In this example, the separating part 302 forms a shared wall between the first engine and the second engine of the propulsion unit.

Therefore, in this second embodiment, the containment rings of the first and second engines are again merged with one another to provide a single unitary containment ring 30 surrounding both of the first and second engines. In the same way as the first embodiment, the merged containment ring 30 of this second embodiment can save weight as compared to the separate individual containment rings 110a, 110b described with reference Figure 1, because a portion of the containment ring 30 is shared.

This second embodiment differs from the first embodiment in that the thickness of the shared part of the containment ring (that is, the separating part 302 of the containment ring) is less than the thickness of the outer part 300 of the main body. In this way, outer part 300 of the main body of the containment ring can be made thick enough to mitigate against a disk burst event, while the separating part 302 of the main body may only be thick enough only to mitigate against a blade-off event rather than a full disk burst. This reduces the weight of the containment ring 30 even more than the containment ring 20 of the first embodiment, because the separating part of the containment ring is thinner. In practice, if the disk of one of the engines in the propulsion unit bursts, the system (or the pilot) may shut down the entire prolusion unit to avoid further damage to the unit. Accordingly, it may not be necessary to protect the second engine against from a disk burst in the first engine, and vice versa, because in practice the remaining engine would be shut down anyway. However, it may still be worthwhile protecting the second engine against a blade-off event in the first engine, and vice versa, because in that case the system (or pilot) may not need to shut down the entire propulsion unit meaning that the remaining engine could still be used.

In one example, the outer part of the containment ring 30 may be sized to mitigate against the effects of a disk burst event in either the first engine or the second engine escaping from the containment ring. In this case, the outer part 300 of the main body may have a thickness of 5 mm. The separating part 302 of the containment ring 30 may be sized to mitigate against the effects of a blade-off event in either the first engine on the second engine, or vice versa. in this case the separating part would have a thickness of 2 mm, which is thinner than the separating part of the first embodiment. In other examines, the thickness of the separating part of the containment ring is less than 75% of the thickness of the outer part of the main body, or less than 50% of the thickness of the outer part of the main body.

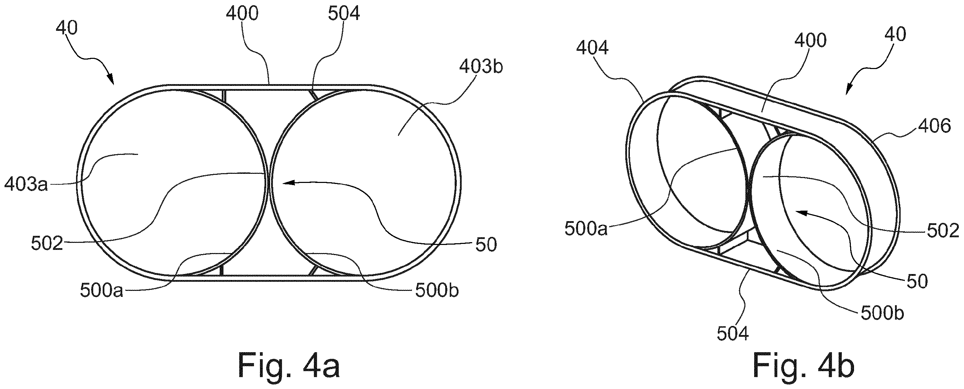

Figures 4a and 4b are a cross sectional view and a perspective view, respectively, of a containment ring 40 for a propulsion unit according to a third embodiment of the present invention. Again, the remaining parts of the propulsion unit are not shown, but the containment ring 40 shown in Figures 4a and 4b is intended for use as part of the propulsion unit 10 shown in Figure 1 in place of the two individual containments rings 110a, 110b shown in Figure 1 in the same way as the first and second embodiments described above.

The containment ring 40 of this third embodiment comprises a main body having at least two openings to provide air flow paths to the pair of engines. In this example, the main body has a first opening 403a and a second opening 403b providing air flow paths to the first and second engines 100a, 100b of the propulsion unit.

The main body comprises an outer part 400 arranged circumferential to the two openings which provides a casing to contain any debris that might be released in the event of a failure of the bladed disk of either the first engine or the second engine. The outer part 400 of the main body again comprises a leading edge flange 404 around the leading edge of the outer part of the main body and a trailing edge flange 406 located around the trailing edge of the outer part of the main body. In this third embodiment, the outer part of the main body comprises two substantially semi-circular ends and two substantially straight sides, parallel to one another, which join the ends together. The straight sides are arranged tangential to the circumference of the bladed disks. This contrasts with the outer part of the main body of the first and second embodiments which follow the circumference of the bladed disks of the engines.

The main body also comprises a separating part 50 which has a reduced mechanical stability compared to the outer part 400. Preferably, the separating part 50 has a thickness that is less than the thickness of the outer part. The separating part 50 separates the openings 403a, 403b from one another. In this example, the separating part 50 forms a shared wall between the first engine and the second engine of the propulsion unit. In this third example, the separating part is formed of ducting which is not strong enough to protect against debris from a disk burst or a blade-off event. Therefore, the separating part does not protect one engine from the other in the event of a failure of a bladed disk of one of the engines, but it nonetheless provides aerodynamic ducting to the engines.

Therefore, in this third embodiment, the outer part 400 of the main body protects the systems or people outside the propulsion unit from debris released in the event of a disk burst or blade-off event, but the engines are substantially unprotected from each another. Advantageously, this reduces the weight of the containment ring 40 even more than the containment rings 20, 30 of the first and second embodiments, because the separating part of the containment ring is even thinner.

In one example, the outer part of the containment ring 40 may be sized to mitigate against the effects of a disk burst event in either the first engine or the second engine escaping from the containment ring. In this case, the outer part 400 of the main body may have a thickness of 5 mm. The separating part 50 of the containment ring 40 may provide aerodynamic ducting for the engines rather than being strong enough to mitigate against the effects of a disk burst or blade-off event in either the first engine or the second engine. In this case, the separating part would have a thickness of, for example, 1.2 mm. In other examples, the thickness of the separating part 50 of the containment ring is less than 50% of the thickness of the outer part of the main body, preferably less than 40% of the thickness of the outer part of the main body, more preferably less than 30% of the thickness of the outer part of the main body.

In this third embodiment, the separating part 50 of the main body comprises at least one partial air duct. In this example, the separating part 50 comprises a first partial air duct 500a and a second partial air duct 500b. The openings are located between the at least one partial air duct and the outer part of the main body. The first opening 403a is located between the first partial air duct 500a and the left-hand semi-circular end of the outer body 400 in Figure 4a, and the second opening 403b is located between the second partial air duct 500b and the right-hand semi-circular end of the outer body 400 in Figure 4a. The separating part 50 comprises a shared portion 502 of the first partial air duct and the second partial air duct. This further reduces the weight of the separating part 50 by reducing the amount of material of the first and second partial air ducts. The thickness of the shared portion 502 of the first and second partial air ducts 500a, 500b may be the same as, or less than, the thickness of the other portions of the first and second partial air ducts. The separating part 50 in this example comprise supports 504 to couple the partial air ducts to the outer part of the main body.

The weight of the containment ring of this third embodiment can be further reduced by reducing the thickness of the straight, parallel parts of the outer part of the main body. Any debris released from the bladed disk towards these straight parts of the outer body will first pass through the partial air duct(s) of the separating parts 50 which, although not being strong enough to stop the debris, will at least absorb some of its energy meaning that the outer part of the main body need not be as thick to absorb the remaining energy. For example, in the case where the partial air ducts 500a, 500b of the separating part 50 have a thickness of 1.2 mm, the straight parts of the outer part of the main body may have a thickness of 3.8 mm while the end parts will have a thickness of 5 mm. Therefore, more generally, the main body of the containment ring may comprise three parts with three different thicknesses: a first portion of an outer part with the highest thickness, a second portion of an outer part with an intermediate thickness, and a separating part with the lowest thickness.

It will be understood that the invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A propulsion unit for an aircraft, the propulsion unit comprising:
a pair of engines, each engine having a bladed disk driven by a motor; and
a containment ring located downstream of an air intake of the engines,
wherein the containment ring comprises a main body having at least two openings to provide air flow paths to the pair of engines, and wherein the main body comprises an outer part circumferential to the at least two openings to protect components adjacent to the propulsion unit against damage in a case of blade failure, the main body further comprising a separating part to separate the openings from each other.

2. A propulsion unit according to Claim 1, wherein the separating part has a reduced mechanical stability compared to the outer part.

3. A propulsion unit according to Claim 1 or 2, wherein the outer part surrounds both of the engines.

4. A propulsion unit according to any preceding claim, wherein the separating part is formed as a shared wall between the engines.

5. A propulsion unit according to Claim 4, wherein the thickness of the shared wall is the same as, or less than, the thickness of the outer part of the main body.

6. A propulsion unit according to Claim 5, wherein the thickness of the shared wall is less than 75% of the thickness of the outer part of the main body.

7. A propulsion unit according to Claim 6, wherein the thickness of the shared wall is less than 50% of the thickness of the outer part of the main body.

8. A propulsion unit according to any preceding claim, wherein the separating part comprises at least one partial air duct.

9. A propulsion unit according to Claim 8, wherein the openings are located between the at least one partial air duct and the outer part of the main body.

10. A propulsion unit according to Claim 9, wherein the separating part comprises a first partial air duct and a second partial air duct, and the at least two openings comprise a first opening located between the first partial air duct and the outer part of the main body and a second opening located between the second partial air duct and the outer part of the main body.

11. A propulsion unit according to Claim 10, wherein the separating part comprises a shared portion of the first partial air duct and the second partial air duct.

12. A propulsion unit according to Claim 11, wherein the thickness of the shared portion of the first and second partial air ducts is the same as, or less than, the thickness of the other portions of the first and second partial air ducts.

13. A propulsion unit according to any of Claims 8 to 12, wherein the thickness of the at least one partial air duct is less than the thickness of the outer part of the main body.

14. A propulsion unit according to Claim 13, wherein the thickness of the at least one partial air duct is less than 50% of the thickness of the outer part of the main body, preferably less than 40% of the thickness of the outer part of the main body, more preferably less than 30% of the thickness of the outer part of the main body.

15. A propulsion unit according to any preceding claim, comprising a leading edge flange arranged around the leading edge of the outer part of the main body and/or a trailing edge flange arranged around the trailing edge of the outer part of the main body.

16. An aircraft, preferably a vertical take-off and landing aircraft, comprising the propulsion unit of any preceding claim.
